# EUROPÄISCHE PATENTANMELDUNG

(11) **EP 4 468 201 A1**
(43) Veröffentlichungstag der Anmeldung: **27.11.2024**
(21) Anmeldenummer: 24174415.0
(22) Anmeldetag: 07.05.2024
(51) Int. Cl.: G06K 19/077

(54) **KARTENFÖRMIGER DATENTRÄGER MIT VERBESSERTER BRUCHSTABILITÄT**

(30) Priorität: 26.05.2023 DE 102023113879
(71) Anmelder: Giesecke+Devrient ePayments GmbH, 81677 München (DE)
(72) Erfinder: Baldischweiler, Michael, 81677 München (DE)
(74) Vertreter: Giesecke+Devrient IP

(57) **Zusammenfassung**

Die Erfindung betrifft einen kartenförmigen Datenträger (1). Der kartenförmige Datenträger (1) umfasst einen Kartenkörper (10), ein Chipelement (20), und eine Stabilisierungsstruktur (30). Das Chipelement (20) ist in dem Kartenkörper (10) aufgenommen und weist eine umlaufende Chipelementkante (21) auf, welche einen um das Chipelement (20) umlaufenden Übergangsbereich (11) zwischen dem Chipelement (20) und dem Kartenkörper (10) definiert. Die Stabilisierungsstruktur (30) ist in dem Kartenkörper (10) angeordnet und erstreckt sich zumindest abschnittsweise in dem Übergangsbereich (11) und stellt somit eine strukturelle Verstärkung des Übergangsbereichs (11) bereit.

## Beschreibung

### Gebiet der Erfindung

Die vorliegende Erfindung betrifft kartenförmige Datenträger. Insbesondere betrifft die Erfindung einen kartenförmigen Datenträger mit verbesserter Bruchstabilität, insbesondere im Übergangsbereich zwischen einem Chipelement und dem Kartenkörper, sowie eine Verwendung eines solchen kartenförmigen Datenträgers.

### Hintergrund der Erfindung

Kartenförmige Datenträger werden heutzutage in einer Vielzahl von Anwendungsgebieten verwendet. Beispielsweise können solche Datenträger zum bargeldlosen Bezahlen von Waren oder Dienstleistungen, zur personenbezogenen Identitätsfeststellung oder für einen Zugang zu internetbasierten Anwendungsprogrammen eingesetzt werden. Dementsprechend gibt es zum Beispiel kartenförmige Datenträger in Form von Chipkarten im Allgemeinen, Zahlungskarten, wie beispielsweise Kreditkarten oder Debitkarten, sowie Personalausweis- oder Identitätskarten. Derartige kartenförmige Datenträger weisen üblicherweise Chipelemente auf, welche entsprechende Funktionen des kartenförmigen Datenträgers implementieren.

Im Hinblick auf fortschreitende Bemühungen um den Umweltschutz werden kartenförmige Datenträger vermehrt aus recycelbaren und/oder bioabbaubaren Materialen, wie Holz, recyceltem PVC und Ozeanplastik, gefertigt. Aus solchen Materialien gefertigte kartenförmige Datenträger weisen jedoch eine geringere Steifigkeit als "normale" PVC-Karten auf. Aufgrund der dort vorherrschenden geringeren Dicke des Kartenkörpers gilt dies insbesondere im Bereich des Übergangs zwischen der Chipelementkante und dem Kartenkörper. Daher kommt es gegenüber normalen PVC-Karten schneller zu Brüchen im Bereich der Chipelementkante, welche zum Bruch von Anschlussleitungen dem Chipelement zugeordneter Spulen führen können. Bei Holzkarten kann es zudem allein durch die Holzstruktur zu Verspannungen als auch zu Feuchtigkeitsaufnahme bzw. Trocknung und damit zum Verzug des Materials kommen. Die Holzkarte weist dann Krümmungen auf, welche teilweise so stark werden, dass die Karte nicht mehr in einen Kartenschlitz eingeführt werden kann.

### Beschreibung

Dementsprechend ist eine Aufgabe der vorliegenden Erfindung, die Bruchstabilität von kartenförmigen Datenträgern zu verbessern.

Diese Aufgabe wird durch den Gegenstand des unabhängigen Anspruchs gelöst. Beispielhafte Ausführungsformen ergeben sich aus den abhängigen Ansprüchen und der nachfolgenden Beschreibung.

Gemäß einem ersten Aspekt wird ein kartenförmiger Datenträger bereitgestellt. Der kartenförmige Datenträger umfasst einen Kartenkörper, ein Chipelement, und wenigstens eine Stabilisierungsstruktur. Das Chipelement ist in dem Kartenkörper aufgenommen und weist eine umlaufende Chipelementkante auf, welche einen um das Chipelement umlaufenden Übergangsbereich zwischen dem Chipelement und dem Kartenkörper definiert. Die Stabilisierungsstruktur ist in dem Kartenkörper angeordnet und erstreckt sich zumindest abschnittsweise in dem Übergangsbereich und stellt somit eine strukturelle Verstärkung des Übergangsbereichs bereit.

Der kartenförmige Datenträger kann zum Beispiel eine Ausweiskarte, eine Identitätskarte (ID-Karte), eine Chipkarte, eine Smartcard oder eine Bezahlkarte, wie beispielsweise eine Kreditkarte oder eine Debitkarte, oder jede andere Karte, welche ein Chipelement umfasst, sein.

Der kartenförmige Datenträger kann ein Kunststoffmaterial oder ein Naturmaterial (wie beispielsweise Holz) aufweisen, welches den Kartenkörper des kartenförmigen Datenträgers bildet. Insbesondere kann der Kartenkörper aus recycelbaren und/oder bioabbaubaren Materialien gefertigt sein. Allerdings ist zu beachten, dass die beschriebenen Struktur auch die Bruchstabilität bei normalen PVC-Karten verbessern kann. Der Kartenkörper kann flächig ausgebildet sein und kann ferner in mehreren Schichten aufgebaut sein, die in einem Laminierprozess bei der Herstellung des Kartenkörpers erzeugt werden. Zum Beispiel kann der Kartenkörper eine Basisstruktur sowie eine Oberflächenschicht, d.h. ein sog. Overlay, aufweisen. Der Kartenkörper kann ebenfalls eines oder eine Vielzahl von Sicherheitsmerkmalen, wie einen Sicherheitschip, im Bereich der Kartenkörperoberfläche usw. umfassen.

Das Chipelement implementiert eine funktionale Schnittstelle sowie logische Funktionen des kartenförmigen Datenträgers. Das Chipelement kann beispielsweise in einer Ausnehmung (beispielsweise einer Ausfräsung) des Kartenkörpers angeordnet sein und eine im Wesentlichen ebene bzw. fluchtende Oberfläche zusammen mit dem Kartenkörper bilden. Das Chipelement weist dabei die umlaufende Chipelementkante auf, welche (bezogen auf die gemeinsame Ebene des Kartenkörpers und des Chipelements) eine äußere Peripherie des Chipelements darstellt, d.h. einen äußeren umlaufenden Rand, und definiert somit an dieser Peripherie einen Übergang zwischen dem Chipelement und dem Kartenkörper. Der umgebende Bereich dieses Übergangs, d.h. der Bereich unmittelbar innerhalb der Peripherie und unmittelbar außerhalb der Peripherie, wird hierin als Übergangsbereich bezeichnet. Dieser Übergangsbereich bildet eine strukturelle Schwachstelle des Kartenkörpers, da dort aufgrund der Ausnehmung die Dicke des Kartenkörpers abnimmt und der Kartenkörper somit leichter bricht. Dies ist insbesondere bei kartenförmigen Datenträgern, die aus recycelbaren Materialien (beispielsweise rPVC, Ozeanplastik) und/oder bioabbaubaren Materialien (beispielsweise Holz) gefertigt sind, der Fall.

Um die Bruchstabilität zu erhöhen, ist deshalb eine Stabilisierungsstruktur in dem Kartenkörper angeordnet. Die Stabilisierungsstruktur ist eine mechanische Struktur, wie beispielsweise ein Draht (beispielsweise ein metallischer Draht, wie ein Kupferdraht) oder jedes andere geeignete stabilisierende Element. Die Stabilisierungsstruktur ist in einer Höhenrichtung, d.h. in einer Richtung zwischen einer vorderen Oberfläche und einer hinteren Oberfläche des Kartenkörpers, zwischen dem Chipelement und dem Kartenkörper angeordnet. Beispielsweise kann sich die Stabilisierungsstruktur in einer Ausnehmung an der vorderen Oberfläche des Kartenkörpers unter dem Chipelement befinden und verläuft in entsprechenden Flächenerstreckungsrichtungen, d.h. in Richtungen, die durch die Flächenausdehnung des Kartenkörpers definiert sind (in der durch den Kartenkörper definierten Fläche verlaufen). Die Stabilisierungsstruktur erstreckt sich dabei in diesen Flächenerstreckungsrichtungen zumindest abschnittsweise in dem umlaufenden Übergangsbereich zwischen dem Chipelement und dem Kartenkörper. Mit anderen Worten ist die Stabilisierungsstruktur unter dem Chipelement angeordnet und verläuft von unterhalt des Chipelements zumindest teilweise über die seitliche Ränder bzw. die Peripherie des Chipelements nach außen, so dass die Stabilisierungsstruktur zumindest teilweise (beispielsweise zumindest an einem Rand des Chipelements) den Übergangsbereich strukturell verstärkt. Dazu kann die Stabilisierungsstruktur beispielsweise in einem periodischen Muster von innerhalb der Peripherie des Chipelements nach außerhalb der Peripherie und wieder zurück verlaufen. Je mehr solcher Übergänge dabei geschaffen werden, desto stabiler ist der Übergangsbereich an der entsprechenden Stelle.

Die Stabilisierungsstruktur kann beispielsweise Teil einer dem Chipelement zugeordneten Spule (wie beispielsweise einer IDC-Inlayspule) oder eines anderen funktionalen Elements (z.B. eines Kupferdrahts, der für den Spulenanschluss vorgesehen ist) sein oder kann ein zusätzliches Element, wie beispielsweise ein zusätzlich aufgenommener Draht sein, welcher bezüglich der Funktion des Chipelements selbst passiv ist, der entsprechend angeordnet und geformt ist, wie weiter unten beschrieben. Beispielsweise kann bei einer Spule die äußerste Windung entsprechend geformt sein, um sich entsprechend, wie weiter oben beschrieben, durch den umlaufenden Übergangsbereich periodisch zu erstrecken. Die Stabilisierungsstruktur kann sich jedoch auch über den reinen Übergangsbereich hinaus (d.h. über den Bereich des Kartenkörper in unmittelbarer Nähe des Chipelements), beispielsweise großflächig durch den Kartenkörper, erstrecken. Dies ist insbesondere bei Holzkarten vorteilhaft, da so ein Verzug des Kartenkörpers großflächig verhindert wird.

Gemäß einer Ausführungsform ist der Kartenkörper aus einem recycelbaren und/oder bioabbaubaren Material gefertigt.

Derartige Materialien werden vermehrt aufgrund des Umweltschutzes für kartenförmige Datenträger, wie beispielsweise Kreditkarten, verwendet, neigen jedoch aufgrund der geringeren Steifigkeit besonders zu Brüchen im Übergangsbereich zwischen Chipelement und Kartenkörper, welche innenliegende Drähte beschädigen können. Die beschriebene Stabilisierungsstruktur wirkt dem entgegen.

Gemäß einer weiteren Ausführungsform ist der Kartenkörper aus recyceltem PVC (rPVC, recyceltes Polyvinylchlorid) und/oder Ozeanplastik gefertigt.

Gemäß einer weiteren Ausführungsform ist der Kartenkörper aus Holz gefertigt.

Gemäß einer weiteren Ausführungsform umfasst die Stabilisierungsstruktur eine dem Chipelement zugeordnete Spule, welche unter dem Chipelement angeordnet und gegenüber dem Chipelement so gedreht ist, dass die Spule sich zumindest teilweise in dem Übergangsbereich erstreckt und dadurch eine strukturelle Verstärkung des Kartenkörpers an dem Übergangsbereich bereitstellt.

Eine solche Spule kann beispielsweise eine ohnehin vorhandene Koppelspule des kartenförmigen Datenträgers sein. Derartige Spulen verlaufen üblicherweise in gleicher Orientierung wie das Chipelement, um die Kopplung zu verstärken. Eine solche Spule kann aus der Orientierung des Chipelements "herausgedreht" sein, d.h. in einer anderen (gedrehten) Orientierung verlaufen, so dass einzelne Windungsseiten sich winklig durch den Übergangsbereich, d.h. winklig zur jeweiligen Chipelementkante, erstrecken und dadurch eine Stabilisierung gegen Brüche/Knicke bereitstellt.

Gemäß einer weiteren Ausführungsform umfasst die Stabilisierungsstruktur einen Draht, der in dem Kartenkörper angeordnet ist und zumindest abschnittsweise den Übergangsbereich in einer periodischen Struktur überspannt.

Beispielsweise kann ein solcher Draht in einer mäanderförmigen, wellenförmigen, dreiecksförmigen, rampenförmigen, oder jeder anderen periodischen Struktur ausgebildet sein, welche den Übergangsbereich wiederholt überspannt/durchquert. Dabei ist zu beachten, dass die periodische Struktur nicht zwangsweise bedeutet, dass die Struktur eine gleichmäßige Periodizität aufweist. Vielmehr ist gemeint, dass die Struktur den Übergangsbereich öfter durchquert und dabei jede Durchquerung von unterhalb des Chipelements über die Chipelementkante nach außerhalb des Chipelements und zurück verläuft. Die Stabilisierungsstruktur kann dabei eine einzige zusammenhängende Struktur sein, die um den gesamten umlaufenden Übergangsbereich angeordnet ist. Die Struktur kann jedoch auch aus einer einzelnen oder aus mehreren einzelnen nicht zusammenhängenden Strukturen bestehen, die jeweils nur Teile des Übergangsbereichs abdecken. Beispielsweise können auch nur horizontal oder nur vertikal verlaufende Bereiche des Übergangsbereichs mit der Stabilisierungsstruktur versehen sein. Auch Kombinationen verschiedener Formen der periodischen Struktur, beispielsweise eine Kombination aus einer mäanderförmigen und einer wellenförmigen Struktur, sind denkbar
Gemäß einer weiteren Ausführungsform verläuft der Draht zumindest abschnittsweise um die umlaufende Chipelementkante. Der Draht erstreckt sich über den Übergangsbereich und weist zumindest abschnittsweise einen mäanderförmigen Verlauf auf.

In einer solchen Gestaltung verläuft also eine Haupterstreckungsrichtung des Drahts entlang der Chipelementkante und innerhalb des Übergangsbereichs. Innerhalb dieser Haupterstreckungsrichtung verläuft der Draht demnach wiederholt von unterhalb des Chipelements nach außerhalb des Chipelements (d.h. über die Peripherie des Chipelements) und wieder zurück, um so eine Verstärkung des Übergangsbereichs bzw. der Chipelementkante bereitzustellen. Dabei verläuft die Stabilisierungsstruktur stets innerhalb des Kartenkörpers. Andere Strukturen als eine mäanderförmige Struktur, wie beispielsweise die oben beschriebene dreiecksförmige, rampenförmige, wellenförmige oder jede andere geeignete Struktur des Drahts sowie jede Kombination dieser Strukturen kann ebenso vorgesehen sein.

Gemäß einer weiteren Ausführungsform verläuft der Draht zumindest abschnittsweise um die umlaufende Chipelementkante. Der Draht erstreckt sich über den Übergangsbereich und weist zumindest abschnittsweise eines aus einem rampenförmigen, einem dreiecksförmigen und einem kurvenförmigen Verlauf auf.

Es ist zudem auch jede Kombination aus diesen oder weiteren Strukturen möglich. Beispielsweise können Teilbereiche des umlaufenden Übergangsbereichs auch mit verschiedenen solchen Strukturen versehen sein. Zudem können Teilbereiche des Übergangsbereichs auch überhaupt keine Stabilisierungsstruktur aufweisen.

Gemäß einer weiteren Ausführungsform ist der Draht eine äußere Windung einer dem Chipelement zugeordneten Spule.

Die Spule kann beispielsweise, wie weiter oben bereits beschrieben, eine Koppelspule, eine IDC-Inlayspule, oder jede andere dem Chipelement zugeordnete Spule sein, die ohnehin in dem kartenförmigen Datenträger vorhanden ist. Die äußere Windung einer solchen Spule kann dann, wie oben beschrieben, als Stabilisierungsstruktur ausgebildet sein. Bei einer solchen Ausführungsform verläuft die Stabilisierungsstruktur insgesamt in dem gesamten umlaufenden Übergangsbereich. Allerdings ist auch denkbar, dass lediglich Teilabschnitte die oben beschriebenen Strukturen (z.B. mäanderförmig, wellenförmig, etc.) aufweisen. Beispielsweise können auch nur horizontale Bereiche oder nur vertikale Bereich solche Strukturen aufweisen. In den Bereichen des umlaufenden Übergangsbereichs, in denen keine solche Struktur vorgesehen ist, sind die Teilstrukturen, in denen eine Stabilisierungsstruktur vorgesehen ist, dann leitend miteinander verbunden, beispielsweise durch gerade Drahtabschnitte.

Gemäß einem zweiten Aspekt ist eine Verwendung des hierin beschriebenen kartenförmigen Datenträgers als Ausweisdokument, Identitätsdokument, Chipkarte oder Bezahlkarte angegeben.

### Kurze Beschreibung der Figuren

- Fig. 1: zeigt einen kartenförmigen Datenträger aus dem Stand der Technik
- Fig. 2: zeigt einen modifizierten Chipelementbereich eines kartenförmigen Datenträgers mit einer gegenüber dem Chipelement des kartenförmigen Datenträgers gedrehten Spule, welche als Stabilisierungsstruktur wirkt.
- Fig. 3: zeigt einen modifizierten Chipelementbereich eines kartenförmigen Datenträgers mit einer mäanderförmige Stabilisierungsstruktur, welche als äußere Windung einer Spule ausgestaltet ist.
- Fig. 4: zeigt einen modifizierten Chipelementbereich eines kartenförmigen Datenträgers mit einer zusätzlichen mäanderförmige Stabilisierungsstruktur.
- Fig. 5: zeigt einen modifizierten Chipelementbereich eines kartenförmigen Datenträgers mit einer zusätzlichen wellenförmigen Stabilisierungsstruktur.

### Detaillierte Beschreibung beispielhafter Ausführungsformen

Die Darstellungen in den Figuren sind schematisch und nicht maßstabsgetreu. Werden in der folgenden Figurenbeschreibung in verschiedenen Figuren die gleichen Bezugszeichen verwendet, so bezeichnen diese gleiche oder ähnliche Elemente. Gleiche oder ähnliche Elemente können aber auch durch unterschiedliche Bezugszeichen bezeichnet sein.

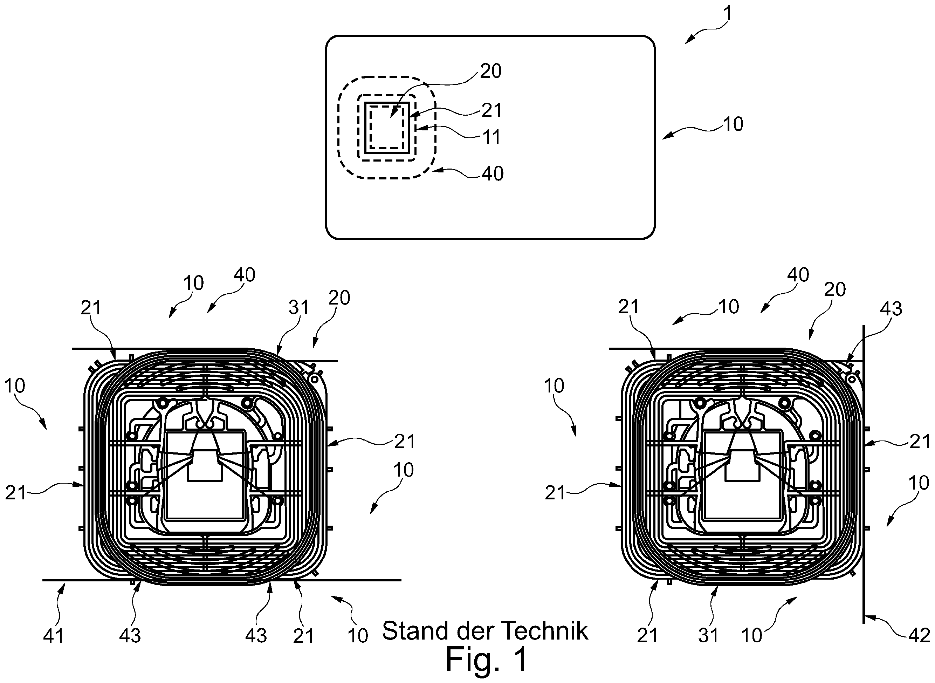

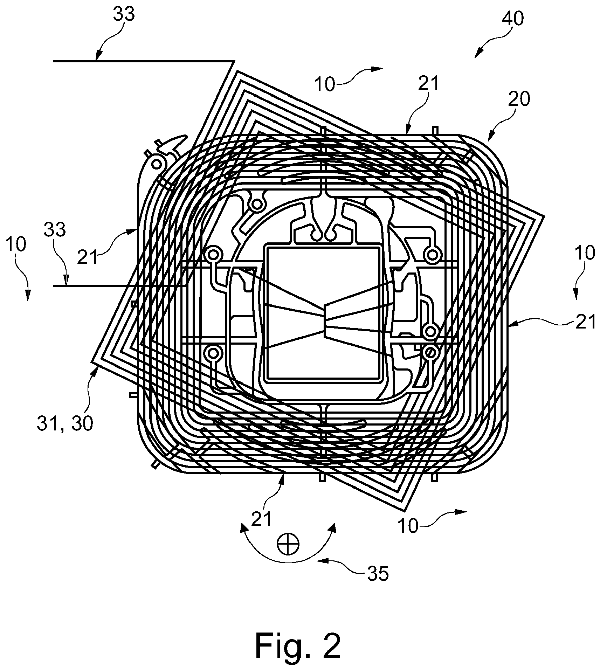

Fig. 1 zeigt einen kartenförmigen Datenträger 1 aus dem Stand der Technik. Das äußere Erscheinungsbild des im oberen Bereich der Fig. 1 dargestellten kartenförmigen Datenträgers 1 ist dabei jedoch identisch mit dem äußeren Erscheinungsbild des erfindungsgemäßen kartenförmigen Datenträgers 1, weshalb der obere Bereich der Fig. 1 im Folgenden auch in Bezug auf die Fig. 2 bis 5 referenziert wird, welche beispielhafte Ausführungsformen des erfindungsgemäßen kartenförmigen Datenträgers 1 (bzw. eines Chipelementbereichs 40 eines solchen Datenträgers, wie durch den gestrichelten Kreis in Fig. 1 angedeutet) zeigen. Zudem ist der in Bezug auf die Fig. 2 bis 5 diskutierte Übergangsbereich 11 in Fig. 1 gestrichelt angedeutet.

Der obere Bereich der Fig. 1 zeigt eine hochschematische vordere Ansicht des kartenförmigen Datenträgers 1. Der kartenförmige Datenträger 1 weist einen Kartenkörper 10 und ein Chipelement 20 auf, welches in dem Kartenkörper aufgenommen ist. Beispielsweise kann der Kartenkörper eine entsprechende Ausfräsung (nicht dargestellt) aufweisen, in welcher das Chipelement 20 aufgenommen ist. Das Chipelement 20 weist eine Chipelementkante 21 auf, welche das Ende des Chipelements 20 und den Anfang des umgebenden Kartenkörpers 10 definiert.

Der untere Bereich der Fig. 1 zeigt zwei Fehlerbilder bei einem solchen kartenförmigen Datenträger 1 aus dem Stand der Technik. Das Chipelement 20 ist dabei jeweils mit einer Spule 31 (beispielsweise Koppelspule, IDC-Inlayspule) dargestellt, welche dem Chipelement zugeordnet ist (insbesondere mit dem Chipelement elektrisch oder induktiv gekoppelt ist) und die beispielsweise bei Kreditkarten für kontaktlose Bezahlfunktionen verwendet werden kann oder die andere Nahfeldkommunikationsverfahren (NFC) implementieren kann. Auf der linken Seite des unteren Teils der Fig. 1 ist ein Fehlerbild dargestellt, bei dem der Kartenkörper 10 entlang einer horizontalen Bruchkante 42 bricht. Auf der rechten Seite des unteren Teils der Fig. 1 ist ein Fehlerbild dargestellt, bei dem der Kartenkörper 10 entlang einer vertikalen Bruchkante 42 bricht. Dabei sind jeweils Drahtbrüche 43 der Spule 31 dargestellt, welche an den Bruchkanten 41, 42 auftreten können. Derartige Drahtbrüche 43 werden durch die in dem erfindungsgemäßen kartenförmigen Datenträger 1 vorgesehene Stabilisierungsstruktur 30 (vgl. Fig. 2 bis 5) verhindert oder deren Wahrscheinlichkeit zumindest deutlich reduziert. Dies ist insbesondere bei Kartenkörpern, welche aus Materialien mit geringer Steifigkeit (rPVC, Ozeanplastik, Holz, etc.) gefertigt sind, vorteilhaft.

Fig. 2 zeigt den in Fig. 1 angedeuteten Chipelementbereich 40 gemäß einem ersten Ausführungsbeispiel des erfindungsgemäßen kartenförmigen Datenträgers 1. Wie im Stand der Technik, ist ein Chipelement 20 in dem Kartenkörper 10 (nicht explizit dargestellt, sondern nur durch das Bezugszeichen 10 angedeutet) aufgenommen. Es ist ebenso eine dem Chipelement 20 zugeordnete Spule 31 (wie oben beschrieben) vorgesehen, welche funktional mit dem Chipelement gekoppelt ist. Die Spule weist Anschlussleitungen 33 auf und ist, anders als im Stand der Technik, gegenüber dem Chipelement 20 entlang einer Drehachse 35 (angedeutet durch einen Doppelpfeil, die Drehachse 35 verläuft senkrecht zur Zeichenebene, d.h. zu der durch den Kartenkörper 10 definierten Ebene) verdreht. Dadurch treten die Spulenwindungen an den Eckbereichen über die Chipelementkante 21 (umlaufend um das Chipelement 20) hervor und erschrecken sich somit teilweise in dem Übergangsbereich 11, welcher den Bereich um die Chipelementkante 21 unmittelbar innerhalb und unmittelbar außerhalb der Chipelementkante 21 darstellt (siehe Fig. 1). Dadurch wird der Übergangsbereich strukturell verstärkt und die mit Bezug auf den unteren Teil der Fig. 1 beschriebenen Fehlerbilder können vermieden oder vermindert werden.

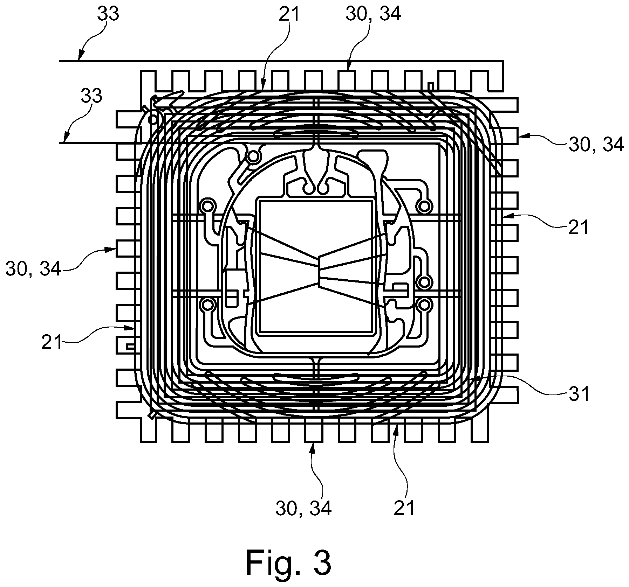

Fig. 3 zeigt den in Fig. 1 angedeuteten Chipelementbereich 40 gemäß einem weiteren Ausführungsbeispiel des erfindungsgemäßen kartenförmigen Datenträgers 1. Die Spule 30 ist hier gleich ausgerichtet, wie das Chipelement 20. Die Stabilisierungsstruktur 30 wird durch eine äußere Windung 34 der Spule 30 definiert, welche um den umlaufenden Übergangsbereich 11 mäanderförmig ausgestaltet ist und so die Chipelementkante 21 (und damit den Übergangsbereich 11, vgl. Fig. 1) wiederholt in einem periodischen Muster durchquert/überspannt. Dadurch wird der Kartenkörper am Übergangsbereich 11, d.h. an der Chipelementkante 21, mechanisch verstärkt. Der Draht 32 ist in der dargestellten Konfiguration mäanderförmig ausgestaltet, kann jedoch auch andere Formen, wie beispielsweise eine Wellenform, eine Dreiecksform, eine Rampenform, oder jede andere geeignete Form umfassen.

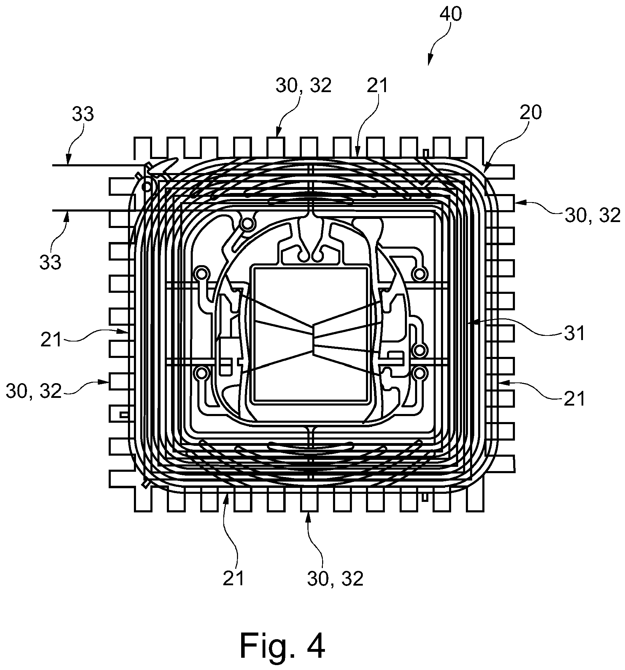

Fig. 4 zeigt den in Fig. 1 angedeuteten Chipelementbereich 40 gemäß einem weiteren Ausführungsbeispiel des erfindungsgemäßen kartenförmigen Datenträgers 1. Dieses Ausführungsbeispiel unterscheidet sich von dem Ausführungsbeispiel der Fig. 3 darin, dass die Stabilisierungsstruktur 30 keine äußere Windung 34 der Spule 31 ist, sondern ein zusätzlich eingefügter und entsprechend geformter Draht 32, welcher nicht mit der Spule 31 elektrisch leitfähig verbunden ist. Der Draht 32 ist in der dargestellten Konfiguration ebenso mäanderförmig ausgestaltet, kann jedoch, wie mit Bezug auf Fig. 3 beschrieben, auch andere geeignete Formen umfassen. Eine solche Stabilisierungsstruktur 30 verbessert ebenso die mechanische Stabilität des Kartenkörpers 10 im Übergangsbereich 11.

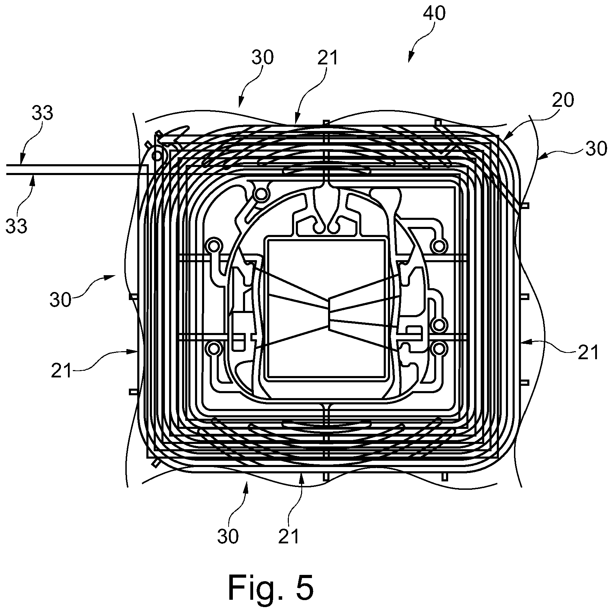

Fig. 5 zeigt den in Fig. 1 angedeuteten Chipelementbereich 40 gemäß einem weiteren Ausführungsbeispiel des erfindungsgemäßen kartenförmigen Datenträgers 1. Die dargestellte Konfiguration ist ähnlich zu der Konfiguration der Fig. 4. Jedoch ist hier der Draht 32, welcher als Stabilisierungsstruktur 30 dient, in vier Teilsegmente an den vier Seiten des Chipelements 20 aufgeteilt, welche jeweils wellenförmig ausgestaltet sind und sich in gleicher Weise, wie mit Bezug zu den Fig. 2 bis 4 beschreiben, durch den Übergangsbereich 11 (vgl. Fig. 1) erstrecken und dadurch eine strukturelle Verstärkung des Kartenkörpers 10 bereitstellen.

Es sollte allgemein beachtet werden, dass die Stabilisierungsstruktur 30 auch nur an einigen Abschnitten des Übergangsbereichs, beispielsweise nur an horizontalen oder nur an vertikalen Abschnitten vorgesehen sein kann, um diese Bereich zu verstärken. Zudem sollte beachtet werden, dass beliebige Kombinationen der hierin beschriebenen Formen der Stabilisierungsstruktur vorgenommen werden können und auch andere, nicht explizit beschriebene Formen, welche zur strukturellen Verstärkung geeignet sind, verwendet werden können.

### Bezugszeichenliste

- 1: kartenförmiger Datenträger
- 10: Kartenkörper
- 11: Übergangsbereich
- 20: Chipelement
- 21: Chipelementkante
- 30: Stabilisierungsstruktur
- 31: Spule
- 32: Draht
- 33: Anschlussleitungen
- 34: äußere Windung
- 35: Drehachse
- 40: Chipelementbereich, Nahausschnitt
- 41: horizontale Bruchkante
- 42: vertikale Bruchkante
- 43: Drahtbrüche

## Patentansprüche

1. Kartenförmiger Datenträger (1), umfassend:
einen Kartenkörper (10);
ein Chipelement (20); und
wenigstens eine Stabilisierungsstruktur (30)
wobei das Chipelement (20) in dem Kartenkörper (10) aufgenommen ist und eine umlaufende Chipelementkante (21) aufweist, welche einen um das Chipelement (20) umlaufenden Übergangsbereich (11) zwischen dem Chipelement (20) und dem Kartenkörper (10) definiert, und
wobei die Stabilisierungsstruktur (30) in dem Kartenkörper (10) angeordnet ist und sich zumindest abschnittsweise im Übergangsbereich (11) erstreckt und somit eine strukturelle Verstärkung des Übergangsbereichs (11) bereitstellt.

2. Kartenförmiger Datenträger (1) nach Anspruch 1, wobei der Kartenkörper (10) aus einem recycelbaren und/oder bioabbaubaren Material gefertigt ist.

3. Kartenförmiger Datenträger (1) nach Anspruch 1 oder 2, wobei der Kartenkörper (10) aus recyceltem PVC, und/oder Ozeanplastik gefertigt ist.

4. Kartenförmiger Datenträger (1) nach Anspruch 1 oder 2, wobei der Kartenkörper (10) aus Holz gefertigt ist.

5. Kartenförmiger Datenträger (1) nach einem der vorstehenden Ansprüche, wobei die Stabilisierungsstruktur (30) eine dem Chipelement (20) zugeordnete Spule (31) umfasst, welche unter dem Chipelement (20) angeordnet und gegenüber dem Chipelement (20) so gedreht ist, dass die Spule (31) sich zumindest teilweise in dem Übergangsbereich (11) erstreckt und dadurch eine strukturelle Verstärkung des Kartenkörpers (10) an dem Übergangsbereich (11) bereitstellt.

6. Kartenförmiger Datenträger (1) nach einem der vorstehenden Ansprüche, wobei die Stabilisierungsstruktur (30) einen Draht (32) umfasst, der in dem Kartenkörper (10) angeordnet ist und zumindest abschnittsweise den Übergangsbereich (11) in einer periodischen Struktur überspannt.

7. Kartenförmiger Datenträger (1) nach Anspruch 6, wobei der Draht (32) zumindest abschnittsweise um die umlaufende Chipelementkante (21) verläuft;
wobei der Draht (32) sich über den Übergangsbereich (11) erstreckt und zumindest abschnittsweise einen mäanderförmigen Verlauf aufweist.

8. Kartenförmiger Datenträger (1) nach Anspruch 6 oder 7, wobei der Draht zumindest abschnittsweise um die umlaufende Chipelementkante (21) verläuft;
wobei der Draht (32) sich über den Übergangsbereich (11) erstreckt und zumindest abschnittsweise eines aus einem rampenförmigen, einem dreiecksförmigen und einem kurvenförmigen Verlauf aufweist.

9. Kartenförmiger Datenträger (1) nach einem der Ansprüche 6 bis 8, wobei der Draht (32) eine äußere Windung (33) einer dem Chipelement (20) zugeordneten Spule (31) ist.

10. Verwendung eines kartenförmigen Datenträgers (1) nach einem der vorstehenden Ansprüche als Ausweisdokument, Identitätsdokument, Chipkarte oder Bezahlkarte.
